Europäisches Patentamt

European Patent Office

Office européen des brevets

(19)

(11) **EP 1 275 491 A1**

(12) # EUROPEAN PATENT APPLICATION

(43) Date of publication:
**15.01.2003 Bulletin 2003/03**

(51) Int Cl.⁷: **B29C 70/54**, B29C 70/44,
B29C 70/46

(21) Application number: **01810671.6**

(22) Date of filing: **09.07.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Ecole Polytechnique Fédérale de
Lausanne
1015 Lausanne (CH)**

(72) Inventors:
• **Weibel, Nicolas Denis
1006 Lausanne (CH)**

• **Manson, Jan-Anders Edvin
1605 Chexbres (CH)**
• **Bourban, Pierre-Etienne
1260 Nyon (CH)**
• **Sunderland, Paul
1007 Lausanne (CH)**

(74) Representative: **Ganguillet, Cyril et al
ABREMA
Agence Brevets & Marques
Ganguillet & Humphrey
Avenue du Théâtre 16
Case postale 2065
1002 Lausanne (CH)**

(54) **Moulding process**

(57) A moulding process, in particular a bladder inflation moulding process for the production of a composite material based part, said composite material comprising a polymer matrix and reinforcing fibres, wherein at least a portion of external surface of said part is shaped by a corresponding interior surface of a mould. The interior surface of said mould is provided with a polishing. Chromium plating or nickel plating improves smoothness and glossy appearance. The best wave and relief appearance is obtained if the proportion of matrix polymer/reinforcing fibres is kept as low as possible.

**Fig 2.**

EP 1 275 491 A1

Printed by Jouve, 75001 PARIS (FR)

**Description**

The present invention concerns a moulding process for the production of a composite material based part, said composite material comprising a polymer matrix and reinforcing fibres, wherein at least a portion of external surface of said part is shaped by a corresponding interior surface of a mould.

Polymer composite materials often provide solutions for light weight constructions, providing parts exhibiting high mechanical performances despite that they are often more expensive than traditional materials such as metals at comparable specific properties. Recently, many industrial applications created a demand for low cost advanced composites, for mass production. Thermoplastic matrix composites have shown very attractive potentials to answer that demand thanks to their short processing cycle times, giving access to high rates of production.

There is currently much activity aimed at the development of processing techniques for cost effective production of complex shaped pieces from fibre reinforced composites. The use of thermoplastic resins as matrices for fibre reinforced composites leads to high fracture toughness and elongation at break, relatively short processing cycle times, a long shelf life of raw materials, repairability and recyclability. However, the commercial use of thermoplastic composites has been limited, due to high viscosity during processing, which makes impregnation of the reinforcing fibre network relatively slow and thereby leads to long processing cycle times. Processing cycle time is defined as the time required to heat, to impregnate the reinforcing fibres, to consolidate and to cool the composite thereafter. Indeed, the viscosities of molten thermoplastics are about 100 Pas to 5'000 Pas, which is very high, in comparison to the viscosities below 10 Pas for non-polymerised thermosets. The direct melt impregnation is problematic, due to these high viscosities. Processes involving reactive chain extension after impregnation can be time consuming, due to the chemical reactions involved. Several authors have proposed manufacturing routes based on various preforms developed for intimate mixing of constituents prior to melting and in-situ impregnation of reinforcing fibres upon melting of a thermoplastic resin.

To produce hollow shapes from fibre reinforced composites, it is appropriate to use either a solid collapsible mandrel or an extensible bladder pressurised with air. The preform used for such Bladder Inflation Moulding processes (BIM) is made from stretch mingled yarn or commingled yarn, that is woven or braided to the approximate shape of the part. A silicon rubber balloon or hose, the bladder, is placed inside the preform prior to placement in the mould. The mould is machined to the exact shape of the part to avoid any post-machining of the part after demoulding. Once the mould is closed, the bladder is inflated to the desired pressure and the mould heated. The temperatures above the melting point of the matrix, impregnation of the fibres, take place. After the thermoplastic melt has flown around the fibres and made a continuous phase, the mould can be cooled and the part demoulded. Limiting factors of this technique are the heating and cooling rates together with the mingling quality of the yarn.

US 5,910,361 (to Guevel et al.) discloses a hybrid yarn made up of an intimate mixture of spun yarns of reinforcing fibres and spun yarns of thermoplastic matrix fibres. The spun yarns are obtained by cracking of the multifilaments with gradual stretching. After stretching, parallel fibres are wrapped with a continuous thermoplastic filament.

The inventors used braided textile preforms based on such stretch-broken commingled or hybrid yarns to minimise shear deformation and wrinkling during a Bladder Inflation Moulding process (BIM). Hollow pieces with varying cross section and concave and convex sharp angles were successfully produced (N.D. Weibel et al., Proceeding of the 20th International SAMPE conference, Apr. 13-15, 1999). When using the hot press heating method and an aluminium mould machined with minimal mass, it was possible to achieve heating rates of 1.3 °C/sec, thus processing cycle times of approximately 3 minutes.

Composite material based parts obtained by the above-described moulding processes often present a poor surface quality and thus must be further processed by polishing and/or coating with paints or varnishes for being accepted by consumers. These additional steps dramatically increase manufacturing costs of equipment incorporating the composite parts at visible locations.

It is thus a primary aim of the invention to further improve a moulding process for the production of composite material based parts as above-described so as to obtain a consumer acceptable surface quality of the manufactured goods at lower costs.

It appeared to the inventors that, rather than improving a varnishing or painting step of the demoulded part, it would be advisable to obtain by means of the moulding process itself a part exhibiting an improved surface quality so as to be accepted by consumers without necessitating any subsequent coating, varnish or paint.

An object of the invention therefore is an improved moulding process of the type defined above, wherein the interior surface of the mould is provided with a polishing and provides the finish of the part's external surface.

Thereby the process according to the invention provides parts with a smooth, consumer acceptable surface quality.

Preferably, said interior surface of the mould is polished so as to impart a roughness Ra according to DIN 4768 of less than 0.5 μm to said interior surface.

According to a preferred embodiment of the invention, the interior surface of the mould is further finished by a metal plating, thereby levelling micro reliefs. A preferred metal plating is nickel plating. With moulds having such a metal plated, in particular nickel plated interior surface, parts having a smooth surface, with a slightly glossy or at least satin-like appearance may be obtained.

A particularly preferred metal plating is chromium plating. with chromium plated moulds, composite based parts having a glossy, outer surface are obtained. The reinforcing fibres appear with a good sharpness to the eye of the observer under a substantially transparent matrix material surface.

Composite material based arts may be processed, i.e. moulded with variable proportions of reinforcing fibres and polymer matrix material. The set values of mechanical parameters may be obtained within a defined range of the proportion polymer matrix / reinforcing fibre for each couple of components polymer / fibres.

Surprisingly, it appeared to the inventors that the best look and transparent appearance are obtained when the proportion of polymer matrix to reinforcing fibres, expressed in volume, is within the lower half of the range of proportions capable to provide parts exhibiting the set values of the mechanical parameters. If the amount of polymer matrix relative to the amount of reinforcing fibres is kept as low as possible, the braid of fibres appears with an improved transparency and gives a better impression of relief, volume and drape. On the contrary, with a higher content of matrix polymer, despite the fact that this component may be itself transparent, the braid appears somewhat flattened and some milky portions appear locally between the yarns.

Therefore, a particularly preferred object of the invention is a process wherein the proportion of polymer matrix to reinforcing fibres, expressed in volume, is within the lower half of the range of proportions capable to provide the set values of the mechanical parameters of said part.

Other features and advantages of the invention will appear to those skilled in the art from the following detailed description of materials and moulds suitable for performing the invention, applied to the example of making a tubular part, in connection with the drawing, wherein:

- Fig. 1 shows examples of composite preforms, known in the art

- Fig. 2 is a schematic sectional view of a BIM device, known in the art

- Fig. 3 is a view in perspective of an element of the mould

- Fig. 4 is a picture of the two halves of a mould with several elements exhibiting different surface states

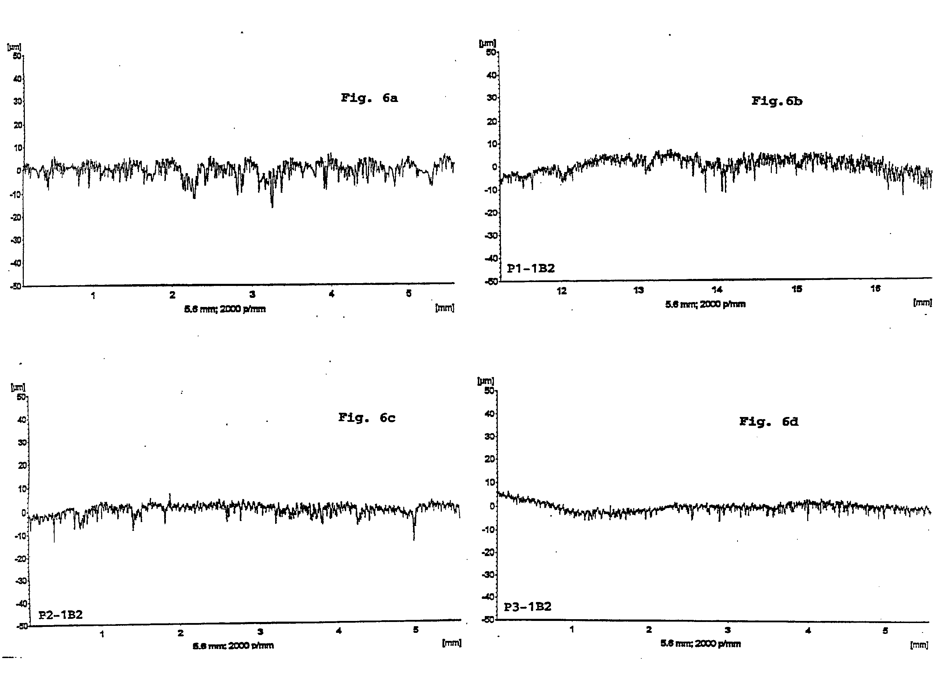

- Fig. 5 is an enlarged view of Fig. 4

- Fig. 6a, 6b, 6c, 6d show roughness measurements of four surface portions of a finely milled mould element and of three samples of tube processed therewith

- Fig. 7 is a schematic view of the mingling of tows

- Fig. 8 is a schematic view of a braiding step of a preform used to produce tubular parts

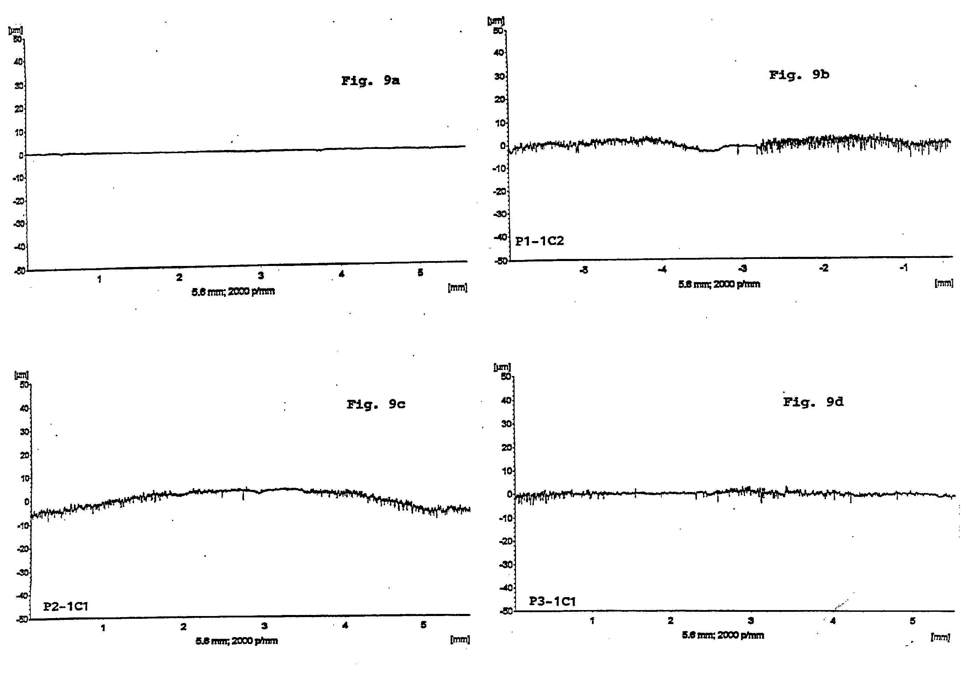

- Fig. 9a, 9b, 9c and 9d show roughness measurements of a chromium plated mould surface and of three corresponding different composite material tubular parts

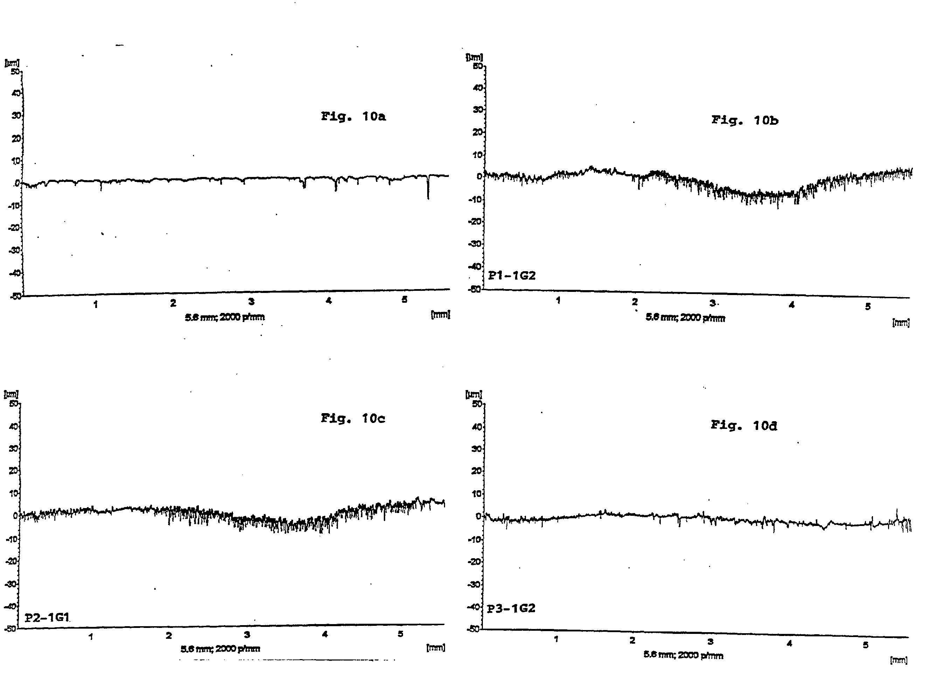

- Fig. 10a, 10b, 10c and 10d show roughness measurements of a polished and nickel plated mould surface and of three corresponding different composite material tubular parts

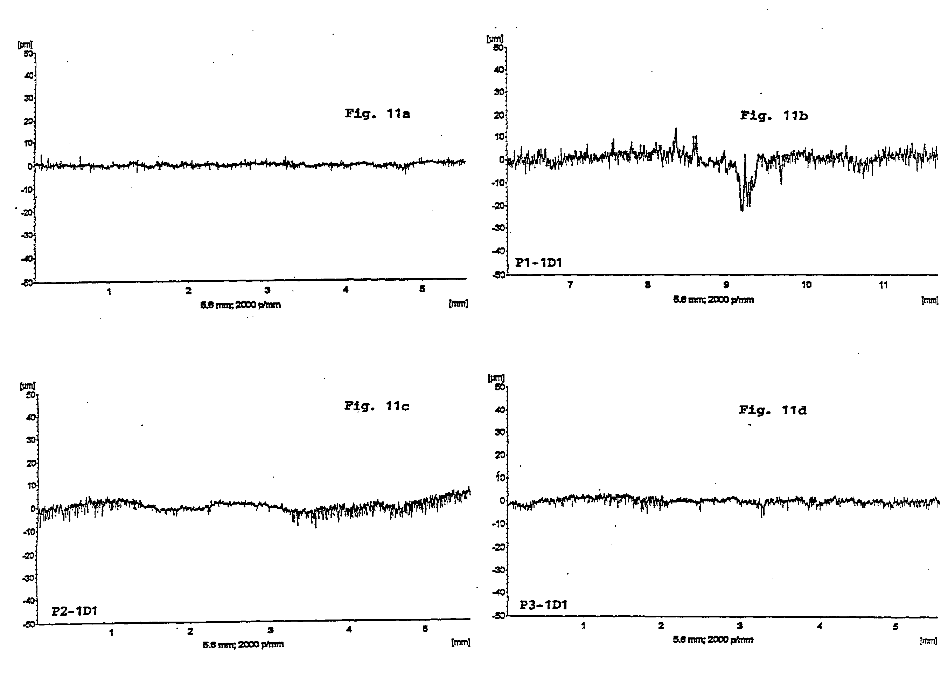

- Fig. 11a, 11b, 11c and 11d show roughness measurements of a mechanically and chemically polished mould surface and of three corresponding different composite material tubular parts

- Fig. 12 shows the evolution of void content in function of processing temperature and pressure.

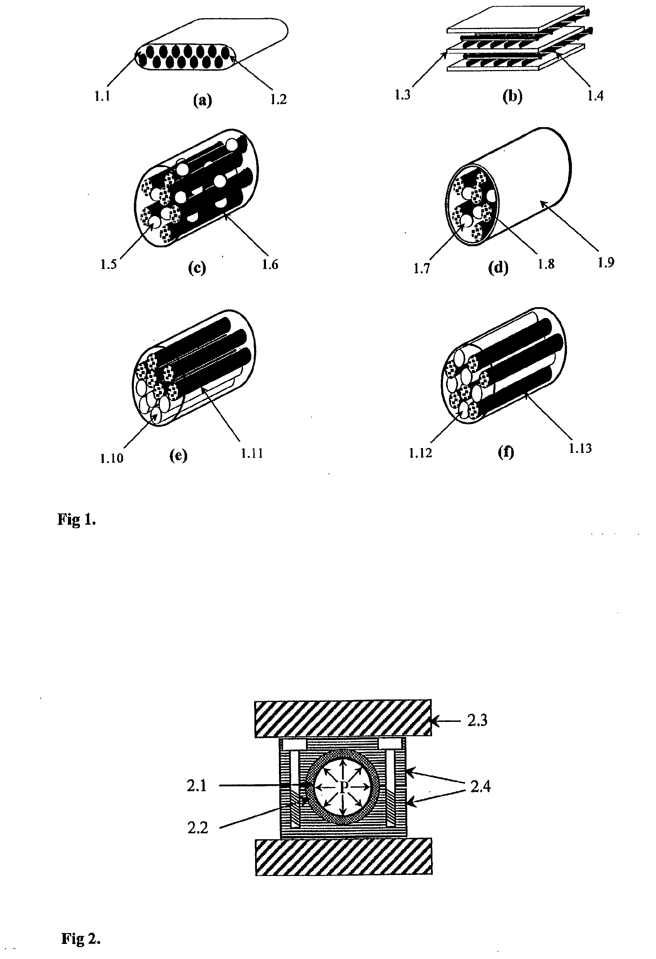

Figure 1 illustrates several types of preforms of thermoplastic composites known in the art:

(a) is a pre-impregnated tow, in which 1.1 is a thermoplastic matrix sheet surrounding reinforcing fibres 1.2;
(b) is a film stacking preform in which thermoplastic films 1.3 alternate with reinforcing fibre fabrics 1.4;
(c) is a reinforcing fibre 1.6 bundle impregnated with thermoplastic powder 1.5;
(d) shows a fibre 1.8 bundle impregnated with thermoplastic powder 1.7 and surrounded by a thermoplastic sheet 1.9;
(e) shows a non-commingled yarn of thermoplastic fibres 1.10 and reinforcing fibres 1.11;

(f) shows a commingled yarn of thermoplastic fibres 1.12 and reinforcing fibres 1.13.

Based on Darcy's law, it may be shown that the impregnation time $t_{imp}$ is given approximately by the relation

$$t_{imp} \cong (\eta x^2 / kP)$$

where $\eta$ is the viscosity of the resin, x is the distance the resin must flow, k the permeability and P the pressure. The flow distance x derives directly from the geometry of the preform.

Preforms based on yarns (a) and (b) are well suited for making non-planar shaped sheets by compression moulding.

Preforms based on yarns (c), (d) and (f) are expected to exhibit short impregnation times. With powder impregnated fibres, as shown in figures 1 (c), and 1 (d), the main advantage is that almost any matrix material can be produced in form of particles by grinding. On the other hand, diffusion distances are greater than for commingled yarns as shown in figure 1 (f). Therefore, minimum impregnation times are deemed to be reached with commingled yarns.

The commingled yarn can be woven or braided into various desired shapes, sheets, tubes, and the like.

Example 1: Production of a stretch-mingled yarn

A commingled yarn of carbon fibres (TENAX HTA 5411) and polyamide 12 fibres (EMS Chemie) was prepared with 56 % volume carbon fibres. To ensure intimate mingling of the constituents, a process similar to that disclosed by US 5,910,361 was used. In a first step, the carbon tow is stretched and broken between two groups of rolls having different tangential speeds. After this operation, the fibres are still aligned and most of their defaults are eliminated by rupture at their weakest points. The matrix fibres are also prepared in the same way.

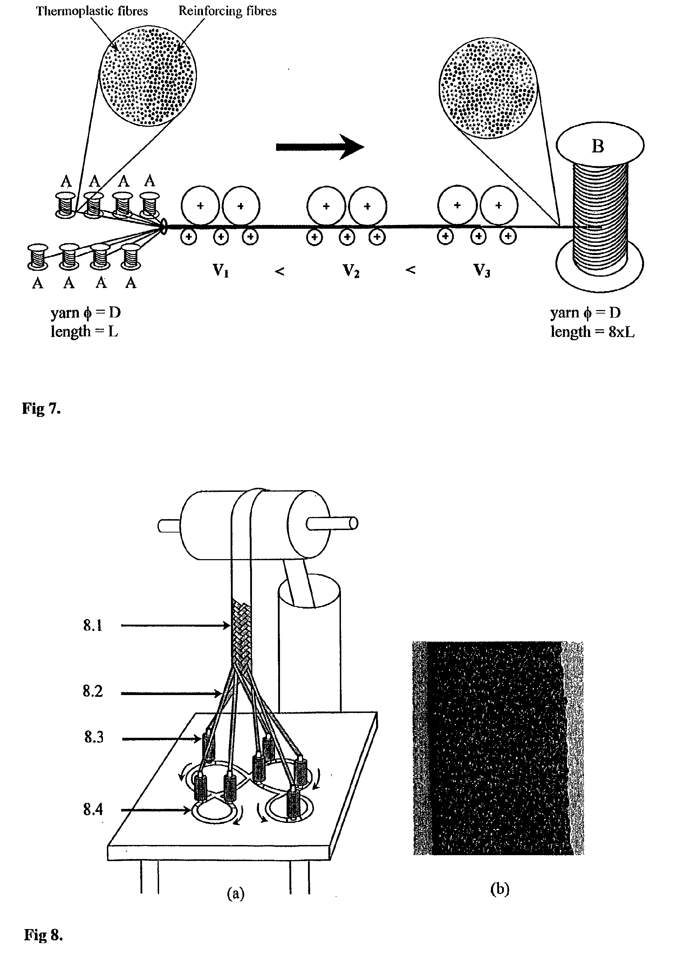

In a second step, both constituents are brought together in the desired weight fraction to form a un-mingled tow, as illustrated in fig. 7. Eight un-mingled tows with tow diameter D and length L are brought together from eight bobbins and stretched by a factor of eight. This gives a tow of equal diameter D than the un-mingled tows, but of length 8 L and eight times mingled. This step is repeated two times in order to obtain finally a 64 time mingling ratio, the so-called stretch-mingled or hybrid tow.

In a final step, the stretch-mingled tow is formed into a stretch-mingled yarn, using a matrix fibre thread twisted around the tow.

Example 2: Forming a preform

The stretch-mingled yarn 8.2 of Example 1 is braided into a tubular shaped preform 8.1, with braiding angles of ± 45°, from bobbins 8.3, as illustrated (8.4) by fig. 8. Two layers of the preform are placed around a bladder and then are ready to be set into a mould of the type illustrated by fig. 2.

The process according to the invention will be further illustrated by way of an example of forming of a composite tube by BIM technique with solid conductive heating.

Example 3: Forming a tube by BIM technique

As illustrated by Fig. 2, the mould is made out of two aluminium halves 2.4, screwed together, to ensure good heat conduction while withstanding up to 12 bars of internal pressure. The pressure P is applied through the bladder 2.1, a silicon rubber tube, which is extensible enough to reach the inside surface of the mould and which resists the processing temperature. The commingled yarn braided in a tube-like shape 2.2 is placed around the bladder and then set into the mould. The mould is closed and the bladder pressurised. The dimension of the braided preform 2.2 is 25 mm and the inner dimension of the mould is 30 mm. The inside pressure P is applied through the silicon rubber tube of the bladder 2.1. The preform 2.2 therefore stretches up to the mould's interior surface as soon as the pressure is applied in the bladder. This allows avoiding wrinkles and producing a uniform wall thickness of the piece. The mould is then placed and pressed between two hot plates 2.3 at 400°C to accelerate heat transfer to the mould, and thereby heated up for melting the thermoplastic resin. After a few minutes, as soon as the thermoplastic melt has flown around the fibres and made a continuous phase, the mould is extracted from between the heating plates and quenched with water while pressure P is maintained. Within seconds, the piece can be stripped from the mould, after unscrewing of the two mould-halves.

It has been shown (N. Bernet et al., J. of composite materials, 33, 8, 1999) that the void content is a representative parameter of achievement of consolidation of the moulded part. Figure 12 shows the evolution of the measured void content (using ASTM D-792) performed on the braided PA 12/carbon fibres commingled yarn consolidated after processing at different temperature and pressure conditions, at 200°C and 5 bars and 240°C and 10 bars respectively. These results show that it is possible to reach a void content of less than 1%, that is to say a workpiece with good mechanical properties, within consolidation times of less than 2 minutes, at relatively low processing temperatures and pressures. It has also been shown that acceptable mechanical properties (tensile strength, breakability) of CF/PA12 tubes are obtainable with proportions of CF from 30 % to 60 % volume. The following examples illustrate the effect of the state of the interior surface of the mould and the composition of the composite material on the surface state of a moulded part.

Example 4: Preparation of various surface states of the interior surface of a mould

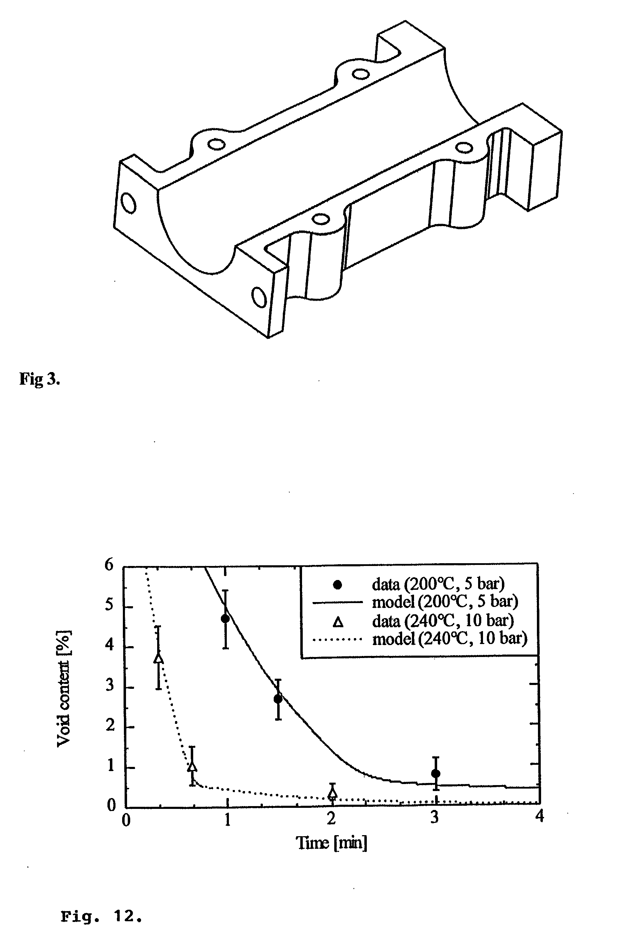

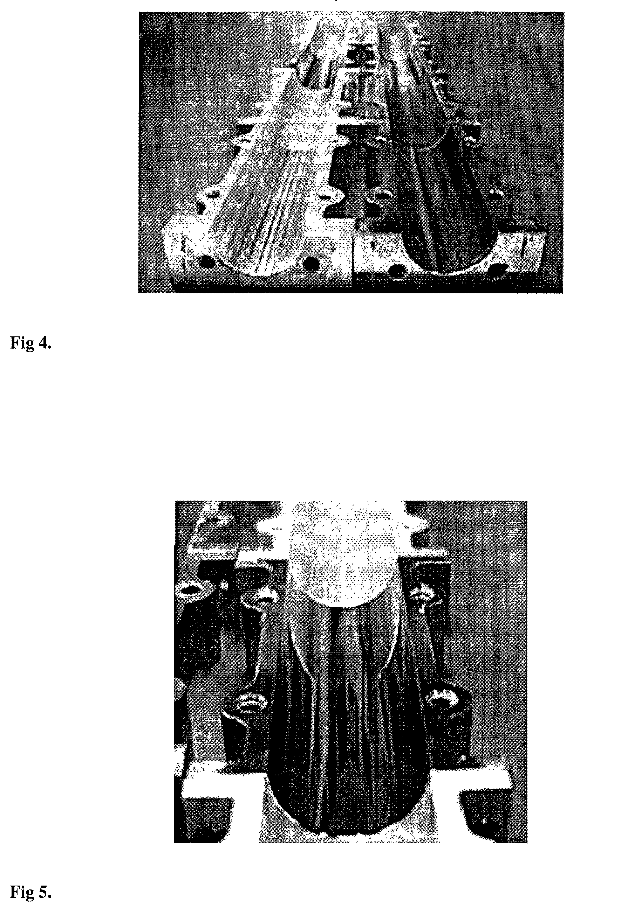

Ten mould elements as shown in Fig. 3 were machined from an aluminium alloy, CERTAL. Each element has a length of 10 cm. The inner diameter of the tube like portion is 30 mm. Each element is provided with flanges at both ends. Adjacent elements are assembled by screwing these flanges together. Each element is further provided with four holes in protruding parts of its body for enabling tight assembling of two half moulds as shown is Fig. 4.

The interior surfaces A-J of the ten mould elements are prepared as follows:

A. coarse milling: the milling is performed first lengthwise and thereafter in radial direction. This technique is well-known to the skilled artisan. The coarse milling has a pitch of 2 mm.

B. Fine milling: the pitch is 0.5 mm.

C. Chromium plating: the element is first milled as above, then polished under a water stream with sandpapers, up to a grain of 500. Thereafter the element is immersed in a chromium ion containing electrolytic solution and chromium is electroplated. This technique is well-known to those skilled in the art.

D. chemical polishing: the element is firstly milled and then polished with sandpaper as above. Thereafter, the element is immersed for 2 mn, 30 sec. in a solution comprising 70 parts pure $H_3PO_4$, 5 parts pure $HNO_3$ and 25 parts pure $H_2SO_4$, at 85° C.

E. Fine milling and nickel plating: the element is first finely milled and thereafter plated with nickel by electroless plating. This technique is well-known in the art.

F. Teflon coating: the milled surface is sand blasted and thereafter coated with two layers of teflon at 260° C. The thickness of the coating is about 20 μm.

G. Nickel plating over polishing: the milled surface is polished with sand paper up to a grain of 500. Thereafter, nickel is plated by electroless plating.

H. Fine polishing: the milled surface is polished with sandpaper up to a grain of 500.

I. Electro-erosion: this technique, where small particles of the mould surface are stripped off by means of an electrified wire under water, is well-known in the art.
This process yields a very rough surface.

J. Eloxing of aluminium oxide on a previously sand-blasted surface; this technique is well-known to those skilled in the art and provides a rough surface.

Example 5: Making of test tubes with different surfaces states

The elements prepared as described in example 4 are assembled 5 by 5 into two half moulds, as shown on Fig. 4.
Three different composite material yarns are prepared according to example 2:

1. 32 % volume CF, 68 % volume PA 12
2. 50 % volume CF, 50 % volume PA 12
3. 56 % volume CF, 44 % volume PA 12

Two tubular braid portions CF/PA 12 obtained as in Example 2 are pushed one over the other whereas an elastomeric bladder tube is inserted therein. The assembled preform is placed between the half moulds, which are then tightly assembled. The moulding process is effected as described in Example 3. Thus, three tube samples P1, P2, P3 with different composite material proportions are obtained. All three are mechanically satisfactory, except for portions corresponding to elements I and J (see below).

Each demoulded tube sample exhibits eight surface portions corresponding to the eight mould elements A to H. The portions corresponding to mould elements I and J were partially broken upon demoulding due to strong adhesion.

The roughness of each of mould elements A to H and the roughness of the three corresponding tube samples were both measured in the longitudinal direction and in the hoop direction using an optical profilometer of the type UBS 14 (made by UBM, Germany).

Table 1 summarises the results for the eight mould elements A to H and the 3 x 8 tube samples with the following meanings:

Ax1 = Mould A, roughness in the longitudinal direction, test one
Ayl = Mould A, roughness in the hoop direction, test one
P1-A1 = Part with 32 % vol. CF roughness, moulded in mould A, test 1
P2-A2 = Part with 50 % vol. CF roughness, moulded in mould A, test 2
P3-A1 = Part with 56 % vol. CF roughness, moulded in mould A, test 1

(The meanings of the other parts of the table are similar.)

- Ra is the roughness measurement according to DIN 4768 (average arithmetic variant from base line);
- Rq is the roughness measurement according to DIN 4762 (quadratic average variant);
- Rm is the roughness measurement according to DIN 4768 (maximal variants from base line);

Table 1

|  | Rm | Ra | Rq | <Ra> |
|---|---|---|---|---|
| Ax1 | 13.51 | 1.92 | 2.4 |  |
| Ax2 | 37.82 | 3.28 | 4.7 |  |
| Ay1 | n/a | n/a | n/a | **2.60** |
| P1-A1 | 13.95 | 1.35 | 1.75 |  |
| P1-A2 | 13.96 | 1.39 | 1.82 |  |
| P2-A1 | 12.22 | 1.01 | 1.32 |  |
| P2-A2 | 16.06 | 1.68 | 2.19 |  |
| P3-A1 | 16.51 | 1.27 | 1.78 |  |
| P3-A2 | 15.07 | 1.17 | 1.55 | **1.31** |

|  | Rm | Ra | Rq | <Ra> |
|---|---|---|---|---|
| Ex1 | 5.82 | 0.38 | 0.49 |  |
| Ex2 | 8.33 | 0.44 | 0.68 |  |
| Ey1 | 12.11 | 1.39 | 1.74 | **0.41** |
| P1-E1 | 8.95 | 0.77 | 0.98 |  |
| P1-E2 | 38.47 | 1.16 | 2.65 |  |
| P2-E1 | 10.53 | 1 | 1.34 |  |
| P2-E2 | 12.46 | 0.94 | 1.19 |  |
| P3-E1 | 10.03 | 0.75 | 1.05 |  |
| P3-E2 | 8.85 | 0.44 | 0.68 | **0.84** |

|  | Rm | Ra | Rq | <Ra> |
|---|---|---|---|---|
| Bx1 | 9.53 | 0.76 | 0.95 |  |
| Bx2 | 19.81 | 2.28 | 2.95 |  |
| By1 | 17.04 | 1.73 | 2.25 | **1.52** |
| P1-B1 | 13.72 | 1.44 | 1.86 |  |
| P1-B2 | 16.71 | 1.44 | 1.88 |  |
| P2-B1 | 13.48 | 1.21 | 1.75 |  |
| P2-B2 | 12.68 | 1.14 | 1.51 |  |
| P3-B1 | 15.27 | 1.63 | 2.08 |  |
| P3-B2 | 8.64 | 0.76 | 1.01 | **1.27** |

|  | Rm | Ra | Rq | <Ra> |
|---|---|---|---|---|
| Fx1 | 8.66 | 0.94 | 1.17 |  |
| Fx2 | 10.33 | 0.8 | 1.1 |  |
| Fy1 | n/a | n/a | n/a | **0.87** |
| P1-F1 | 36.01 | 5.12 | 6.48 |  |
| P1-F2 | 23.06 | 1.01 | 1.55 |  |
| P2-F1 | 12.32 | 1.23 | 1.66 |  |
| P2-F2 | 13.08 | 1.16 | 1.52 |  |
| P3-F1 | 13.98 | 1.47 | 2 |  |
| P3-F2 | 16.96 | 0.96 | 1.39 | **1.83** |

|  | Rm | Ra | Rq | <Ra> |
|---|---|---|---|---|
| Cx1 | 1.09 | 0.06 | 0.09 |  |
| Cx2 | 0.74 | 0.08 | 0.11 |  |
| Cy1 | 2.98 | 0.17 | 0.27 | **0.07** |
| P1-C1 | 16.69 | 1.02 | 1.42 |  |
| P1-C2 | 8.5 | 0.65 | 0.86 |  |
| P2-C1 | 5.46 | 0.46 | 0.61 |  |
| P2-C2 | 5.9 | 0.53 | 0.7 |  |
| P3-C1 | 6.42 | 0.41 | 0.57 |  |
| P3-C2 | 6.01 | 0.4 | 0.55 | **0.58** |

|  | Rm | Ra | Rq | <Ra> |
|---|---|---|---|---|
| Gx1 | 6.21 | 0.39 | 0.59 |  |
| Gx2 | 10.45 | 0.5 | 0.78 |  |
| Gy1 | 22.76 | 0.95 | 1.82 | **0.45** |
| P1-G1 | 9.38 | 0.83 | 1.13 |  |
| P1-G2 | 8.67 | 0.81 | 1.07 |  |
| P2-G1 | 9.07 | 0.85 | 1.13 |  |
| P2-G2 | 8.62 | 0.73 | 0.99 |  |
| P3-G1 | 9.89 | 0.72 | 1.03 |  |
| P3-G2 | 6.86 | 0.43 | 0.62 | **0.73** |

|  | Rm | Ra | Rq | <Ra> |
|---|---|---|---|---|
| Dx1 | 6.08 | 0.58 | 0.75 |  |
| Dx2 | 5.72 | 0.46 | 0.6 |  |
| Dy1 | 8.33 | 0.68 | 0.9 | **0.52** |
| P1-D1 | 25.08 | 1.81 | 2.79 |  |
| P1-D2 | 20.11 | 2.04 | 2.75 |  |
| P2-D1 | 10.17 | 0.75 | 1.03 |  |
| P2-D2 | 9.42 | 0.97 | 1.29 |  |
| P3-D1 | 8.49 | 0.72 | 0.96 |  |
| P3-D2 | 7.75 | 0.68 | 0.9 | **1.16** |

|  | Rm | Ra | Rq | <Ra> |
|---|---|---|---|---|
| Hx1 | 8.8 | 0.68 | 0.92 |  |
| Hx2 | 6.55 | 0.68 | 0.89 |  |
| Hy1 | 10.17 | 0.83 | 1.11 | **0.68** |
| P1-H1 | 9.34 | 0.97 | 1.24 |  |
| P1-H2 | 12.43 | 1.05 | 1.38 |  |
| P2-H1 | 10.66 | 0.92 | 1.23 |  |
| P2-H2 | 11.93 | 1.1 | 1.49 |  |
| P3-H1 | 12.6 | 0.95 | 1.35 |  |
| P3-H2 | 14.39 | 0.81 | 1.13 | **0.97** |

Example 6: Optical aspect of the outer surface of the ten tube portions

For easier understanding, the tube portions are numbered as the mould elements.

A: the texture of the mould element is reproduced on the tube samples.

B: with composite material mixture 1, the texture of the tube portion is apparent and similar to the surface of the mould. With higher proportions of reinforcing fibres, the surface of the tube element is smoother, but a pattern due to the milling appears.

C: with all three material mixtures, this tube portion is very smooth and glossy.

D: these portions exhibit little roughness. Pittings appear within smooth zones. The roughness seems to increase when the proportion of PA 12 increases.

E: the samples appear more patterned than B to the eye. The roughness measurement shows that the roughness is much lower for the material mixture 3.

F: the surface of the tube elements is rather rough. The measurements show peak to valley heights centred at 6 µm and 1 µm respectively. The 1 µm peak to valley height diminishes when the proportion of matrix material diminishes.

G: the surface of the tube element is very smooth but less than C. The roughness diminishes when the matrix proportion diminishes.

I and J: the tubes showed strong adhesion to the mould elements, so that it was difficult to demould the corresponding tube parts. Thus, this type of surface treatment is unsuitable.

Example 7: Esthetical appraisal

A group of 16 persons was asked to classify the eight portions, A to H of a tube, according to their personal preference. Table 1 show the average ranks obtained:

|  | A | B | C | D | E | F | G | H |
|---|---|---|---|---|---|---|---|---|
| Average value of positions | 7.31 | 5.81 | 1.94 | 3.31 | 5.06 | 6.38 | 3.31 | 3.81 |
| Mean rank | 8 | 6 | 1 | 2 | 5 | 7 | 2 | 4 |

Table 1 shows that very smooth and glossy surfaces are preferred. Less preferred are smooth and matt surfaces. Textured surfaces are disliked, because they seem to "lack a finish". Especially portion C of all samples exhibit a good transparency.
The tested persons preferred in bulk samples 3, because the braided strains of reinforcing carbon fibres exhibit an appearance of volume and waves whereas they appear flattened in samples 1.

**Claims**

1.   A moulding process for the production of a composite material based part, said composite material comprising a polymer matrix and reinforcing fibres, wherein at least a portion of external surface of said part is shaped by a corresponding interior surface of a mould, **characterised in that** said interior surface of said mould is provided with a polishing, and provides the finish of said portion of external surface of the part.

2.   A process according to claim 1, **characterised in that** said polishing is provided so as to impart a roughness Ra according to DIN 4768 of less than 0.5 µm to said interior surface of the mould.

3.   A process according to claim 1 or 2, **characterised in that** said interior surface is further finished by a metal plating.

4.   A process according to claim 3, **characterised in that** said metal plating is a chromium plating.

5.   A process according to claim 3, **characterised in that** said metal plating is a nickel plating.

6. A process according to any of the preceding claims, wherein said part is a hollow-shaped part, said moulding process is a bladder inflation moulding process and said polymer matrix is a thermoplastic matrix.

7. A process according to claim 6, **characterised in that** said composite material is selected from commingled and stretch-mingled preform yarns.

8. A process according to claim 6 or 7, **characterised in that** said composite material is a carbon fibre/PA12 stretch-mingled yarn.

9. A process according to claim 8, **characterised in that** the proportion of said PA12 is less than 50 % in volume of said composite material.

10. A process according to any of claims 1 to 8, wherein the proportion of polymer matrix to reinforcing fibres, expressed in volume, is within the lower half of the range of proportions capable to provide the set values of the mechanical parameters of said part.

11. A composite material based part, obtained by a process as claimed in anyone of the preceding claims.

**Fig 1.**

**Fig 2.**

Fig 3.

Fig. 12.

**Fig 4.**

**Fig 5.**

Fig. 6a

Fig. 6b

P1-1B2

5.6 mm; 2000 p/mm

Fig. 6c

P2-1B2

5.6 mm; 2000 p/mm

Fig. 6d

P3-1B2

5.6 mm; 2000 p/mm

Thermoplastic fibres    Reinforcing fibres

A  A  A  A

A  A  A  A

yarn $\phi$ = D
length = L

B

yarn $\phi$ = D
length = 8xL

$V_1$    <    $V_2$    <    $V_3$

**Fig 7.**

8.1

8.2

8.3

8.4

(a)                    (b)

**Fig 8.**

Fig. 9a

Fig. 9b

P1–1C2

5.6 mm; 2000 p/mm

5.6 mm; 2000 p/mm

Fig. 9c

Fig. 9d

P2–1C1

P3–1C1

5.6 mm; 2000 p/mm

5.6 mm; 2000 p/mm

Fig. 10a

Fig. 10b
P1-1G2

Fig. 10c
P2-1G1

Fig. 10d
P3-1G2

Fig. 11a

Fig. 11b

Fig. 11c

Fig. 11d

| | **European Patent Office** | **EUROPEAN SEARCH REPORT** | **Application Number** EP 01 81 0671 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 098 624 A (SMITH RAYNA W ET AL) 24 March 1992 (1992-03-24) | 1,2,10, 11 | B29C70/54 B29C70/44 B29C70/46 |
| A | * example 1 * | 6-9 | |
| X | EP 0 437 395 A (CRAY VALLEY SA) 17 July 1991 (1991-07-17) * example 1 * | 1-4,10, 11 | |
| X | US 4 397 048 A (HANCOX NEIL L ET AL) 9 August 1983 (1983-08-09) * column 3, line 21 – line 26 * | 1,2 | |
| Y | | 7-9 | |
| Y | US 5 246 520 A (SCANLON JOHN F ET AL) 21 September 1993 (1993-09-21) * the whole document * | 7-9 | |
| X | US 5 204 170 A (KUYZIN GREGG S) 20 April 1993 (1993-04-20) * column 11, line 20 – line 43 * * column 13, line 49 – line 61 * | 1,2,10, 11 | TECHNICAL FIELDS SEARCHED (Int.Cl.7) B29C |

The present search report has been drawn up for all claims

| Place of search | Date of completion of the search | Examiner |
|---|---|---|
| THE HAGUE | 19 December 2001 | Van Wallene, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 81 0671

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2001

| Patent document cited in search report | | Publication date | Patent family member(s) | | Publication date |
|---|---|---|---|---|---|
| US 5098624 | A | 24-03-1992 | US | 4950439 A | 21-08-1990 |
| | | | US | 5011737 A | 30-04-1991 |
| | | | US | 4948661 A | 14-08-1990 |
| | | | US | 5071608 A | 10-12-1991 |
| EP 0437395 | A | 17-07-1991 | FR | 2656825 A1 | 12-07-1991 |
| | | | DE | 69100205 D1 | 09-09-1993 |
| | | | DE | 69100205 T2 | 05-05-1994 |
| | | | EP | 0437395 A2 | 17-07-1991 |
| | | | ES | 2043435 T3 | 16-12-1993 |
| US 4397048 | A | 09-08-1983 | GB | 2085351 A ,B | 28-04-1982 |
| | | | SE | 445515 B | 30-06-1986 |
| | | | DE | 3137652 A1 | 15-07-1982 |
| | | | FR | 2490951 A1 | 02-04-1982 |
| | | | SE | 8106035 A | 13-04-1983 |
| US 5246520 | A | 21-09-1993 | NONE | | |
| US 5204170 | A | 20-04-1993 | MX | 9204480 A1 | 01-02-1993 |

EPO FORM P0459